# EUROPEAN PATENT SPECIFICATION

(11) **EP 2 522 584 B1**
(45) Date of publication and mention of the grant of the patent: **25.09.2013**
(21) Application number: 12380023.7
(22) Date of filing: 10.05.2012
(51) Int. Cl.: B65B 43/12, B65B 43/32, B65B 43/46, B65B 43/54, B65B 59/04, B65G 17/12

(54) **Carousel for a horizontal-type automatic packaging machine**
Endlosförderer für eine horizontale automatische Verpackungsmaschine
Transporteur sans fin pour une machine d'emballage automatique du type horizontale

(30) Priority: 12.05.2011 ES 201100539
(43) Date of publication of application: 14.11.2012
(73) Proprietor: Mespack, S.L., 08130 Santa Perpètua de Mogoda (Barcelona) (ES)
(72) Inventor: Marti Roche, Enric, 08130 Santa Perpètua de Mogoda (Barcelona) (ES); Fité Sala, Menna, 08130 Santa Perpètua de Mogoda (Barcelona) (ES); Mora Flores, Francisco, 08130 Santa Perpètua de Mogoda (Barcelona) (ES)
(74) Representative: Torner Lasalle, Elisabet

(56) References cited:
- ES-U- 1 070 247

## Description

### Field of the Art

The present invention relates to a carousel for a horizontal-type automatic packaging machine, comprising a plurality of gripper-holding carriages which are moved along a guide device which has a work section and a return section, and decoupling means to locate said gripper-holding carriages accumulated in the return section in a maintenance position leaving the work section clear for the purpose of allowing the performance of cleaning and maintenance tasks in different devices and units located in the work section without the hindrance that the gripper-holding carriages represent.

### Background of the Invention

Document ES 1070247 U discloses a horizontal-type automatic packaging machine including successive operating units such as container supplying, filling, closing and deliverying units, and a carousel which moves a plurality of carriages, each of which holding a gripper configured to grip a container, along a guide device defining a horizontal closed circuit which has a work section through said operating units and a return section. The carousel includes a drum cam provided with a cam groove in which a cam follower assembled in each carriage is coupled to drive the carriages along said work section, and a flexible traction member, such as a belt, roller chain or the like, which has fixed driving elements which are coupled with corresponding coupling elements assembled in the carriages to drive the carriages along said return section.

A drawback with the carousel of the mentioned document ES 1070247 U is that the carriages with their corresponding grippers are permanently coupled either to the drum cam or to the flexible traction member, such that when the packaging machine is stopped to perform maintenance tasks, a plurality of carriages with their corresponding grippers are located in the work section and thereby complicate the maintenance tasks to be performed in the drum cam and in the operating units located along the work section.

### Disclosure of the Invention

The present invention contributes to reducing the aforementioned and other drawbacks providing a carousel for a horizontal-type automatic packaging machine, comprising a guide device defming a horizontal closed circuit which has a work section adjacent to successive operating units of said packaging machine and a return section, a plurality of gripper-holding carriages coupled to said guide device such that they can move freely along it, with at least one gripper configured to grip containers installed on each gripper-holding carriage, a drum cam provided with a cam groove in which a cam follower assembled in each gripper-holding carriage is coupled to drive the gripper-holding carriages along said work section, and a flexible traction member, such as a roller chain or the like, which has fixed driving elements which are coupled with corresponding coupling elements assembled in the gripper-holding carriages to drive the gripper-holding carriages along said return section.

The carousel of the present invention further comprises decoupling means which can be activated to decouple said coupling elements from said driving elements at the beginning of the return section, and retaining means to maintain the coupling elements decoupled from the driving elements along at least part of the return section, whereby the gripper-holding carriages accumulate next to each other in the return section in a maintenance position leaving the work section clear. Therefore, when the coupling elements are decoupled from the driving elements, the gripper-holding carriages can be moved freely along the return section independently of whether the mentioned flexible traction member is moving or stopped.

The carousel of the present invention further comprises auxiliary driving means to drive the gripper-holding carriages along the return section while the coupling elements are maintained decoupled from the driving elements of the main flexible traction member, and recoupling means which can be activated to couple again said coupling elements with the driving elements of the main flexible traction member at the end of the return section, whereby the gripper-holding carriages are returned to a work position.

In one embodiment, each of the coupling elements is installed such that it can move along a vertical guide element fixed to the corresponding gripper-holding carriage between a lower position in which the coupling element is coupled to one of the driving elements of the main flexible traction member, and an upper position in which the coupling element is decoupled from the driving elements of the main flexible traction member. The mentioned vertical guide element is preferably associated with a stop defining the lower position of the coupling element and an elastic element, such as a coil spring, is arranged such that it pushes the coupling element towards the lower position and against said stop.

In correspondence, the mentioned decoupling means are configured to move the coupling elements of each gripper-holding carriage from said lower position to said upper position, said retaining means are configured to maintain the coupling elements of the gripper-holding carriages in the upper position, and said recoupling means are configured to move the coupling elements of the gripper-holding carriages from the upper position to the lower position.

In one embodiment, the retaining means comprise a support track arranged along at least part of the return section and each coupling element has a fixed wheel or runner running on said support track when the coupling element is in said upper position, and the decoupling means comprise an upward ramp which can be moved between a withdrawn position, outside the trajectory of said wheel or runner when the coupling element is in the lower position, and an operating position in which said upward ramp has an entrance end located at a level lower than the trajectory of the wheel or runner when the coupling element is in the lower position and an exit end located adjacent to and at the same level as an entrance end of the support track, whereby the wheels or runners run on said upward ramp when it is in said operating position to move the coupling elements from the lower position to the upper position.

In this same embodiment, the recoupling means comprise a downward ramp which can be moved between a withdrawn position, outside the trajectory of said wheel or runner when the coupling element is in the lower position, and an operating position in which said downward ramp has an entrance end located adjacent to and at the same level as an exit end of the support track and an exit end located at a level lower than the trajectory of the wheel or runner when the coupling element is in the lower position, whereby the wheels or runners run on said downward ramp when it is in said operating position to move the coupling elements from the upper position to the lower position.

Also in this embodiment, the auxiliary driving means comprise an auxiliary flexible traction member, such as a belt, roller chains or the like, which has a fixed auxiliary driving element which is coupled with an element of the last gripper-holding carriage when all the gripper-holding carriages accumulate in the return section with their coupling elements maintained in the upper position by the support track to move the gripper-holding carriages, which push each other, along the return section to said work position.

This auxiliary flexible traction member is operated by an actuator controlled synchronously with an actuator which actuates the main flexible traction member such that when a gripper-holding carriage is pushed along the downward ramp, the corresponding coupling element coincides when descending with one of the driving elements fixed to the main flexible traction member and is coupled thereto.

The support track is located at such a height that the wheel or runner passes below the support track when the coupling element is in said lower position. Therefore, when the upward and downward ramps are in the respective withdrawn positions during normal work operation, the gripper-holding carriages arranged in their work positions are driven along the return section by the main flexible traction member without neither the support track nor the upward and downward ramps being an obstacle.

It will be understood that, alternatively, the configuration of the mentioned coupling elements, decoupling means, retaining means, recoupling means and auxiliary driving means can be different from those described above without departing from the scope of the present invention.

### Brief Description of the Drawings

The foregoing and other features and advantages will be better understood from the following detailed description of an embodiment with reference to the attached drawings, in which:
Fig. 1 is a perspective view of a carousel for a horizontal-type automatic packaging machine according to the present invention, with a plurality of gripper-holding carriages arranged in a work position;
Fig. 2 is a perspective view of the carousel of Fig. 1 with the gripper-holding carriages arranged in a maintenance position;
Fig. 3 is a plan view of the carousel with the gripper-holding carriages arranged in the maintenance position, where a drum cam has been omitted for greater clarity of the drawing;
Fig. 4 is a partial perspective view of the carousel showing decoupling means, retaining means and auxiliary driving means;
Fig. 5 is a partial perspective view of the carousel showing recoupling means;
Fig. 6 is a cross-sectional view of a gripper-holding carriage located in a return section of the carousel in a work position; and
Fig. 7 is a cross-sectional view of a gripper-holding carriage located in the return section of the carousel in a maintenance position.

### Detailed Description of an Exemplary Embodiment

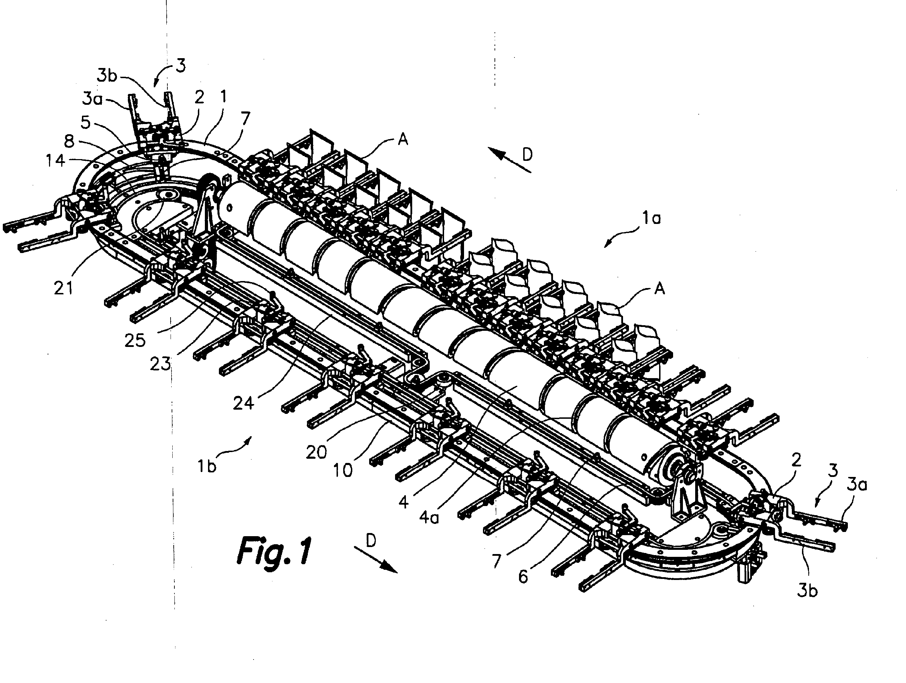

Referring first to Fig. 1, there is shown a carousel according to an embodiment of the present invention, which is applicable to a horizontal-type automatic packaging machine. The carousel comprises a guide device 1 in the form of a track defining a horizontal closed circuit which has a rectilinear work section 1a and a return section 1b having a rectilinear portion parallel to the work section I a and two curved portions connecting the ends of the work section 1a with the ends of the rectilinear portion of the return section 1b. The mentioned work section I a is adjacent to successive operating units (not shown) of said packaging machine, such as an empty container supplying unit, a container filling unit, a container closing unit by heat-sealing, and a filled and closed container deliverying unit.

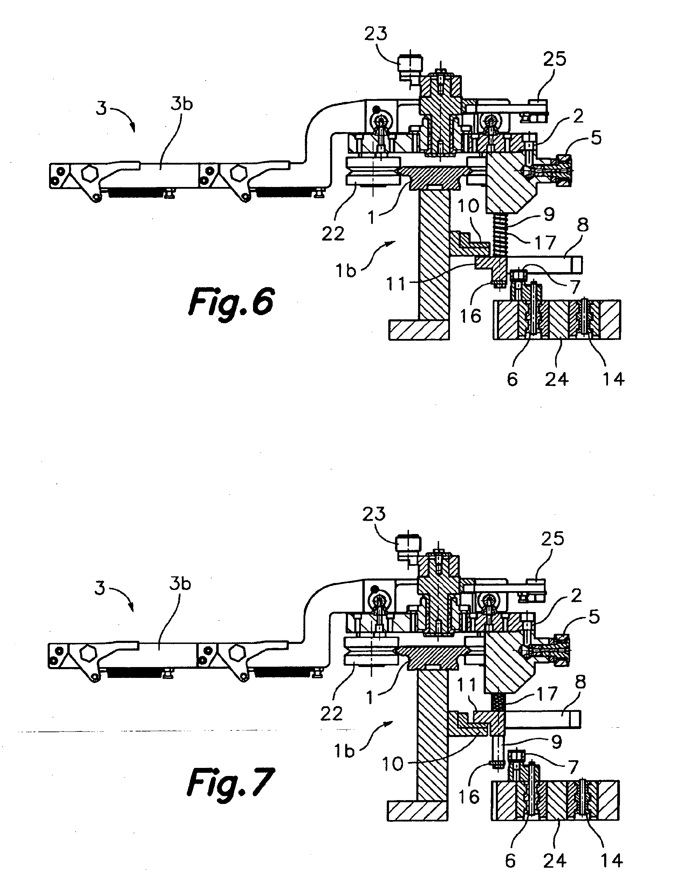

The carousel includes a plurality of gripper-holding carriages 2 coupled to said guide device 1, for example by means of wheels 22 (better shown in Figs. 6 and 7), such that the gripper-holding carriages 2 can move freely along the guide device 1. Fig. 1 shows a work position in which the gripper-holding carriages 2 are distributed along the entire closed circuit defined by the guide device 1. On each gripper-holding carriage 2 there is installed a gripper 3 configured to grip a pair of containers A arranged in parallel. The mentioned containers A are of "satchet" or "pouch" type, and are open on the top when they are received by the grippers 3 of the gripper-holding carriages 2 located at the beginning of the work section 1a.

As is conventional, the grippers 3 are operated by external actuators (not shown) to grip the empty containers A supplied by the mentioned supplying unit at the beginning of the work section 1a and to release the filled and closed containers A into the mentioned deliverying unit at the end of the work section 1a. The grippers 3 are assembled in arms 3a, 3b associated with a mechanism operated by cam followers 23, 25 coupled to cams (not shown) which moves the mentioned arms 3a, 3b towards each other when the corresponding gripper-holding carriages 2 are in a mid region of the work sections, whereby the upper openings of the containers are open, as shown in Fig. 1, to allow filling the containers A by the mentioned filling unit. Then, the arms 3a, 3b of the grippers 3 move again to the initial position to close the upper openings and to allow heat-sealing the containers A by the mentioned container closing unit.

Along the work section 1a there is installed a drum cam 4 operated by an actuator (not shown) to rotate at a constant speed, and in each gripper-holding carriage 2 there is assembled a cam follower 5 which is coupled to a cam groove 4a of said drum cam 4 at the beginning of the work section l a and is decoupled from it at the end of the work section 1a. Therefore when the drum cam 4 rotates, it drives the gripper-holding carriages 2 along the work section 1a in the forward direction indicated by means of arrows D. The mentioned cam groove 4a does not have a constant passage, and is configured to maintain the gripper-holding carriages 2 in stationary positions for predetermined time intervals, and to move them forward at a speed greater than the mean speed along sections between the stationary positions.

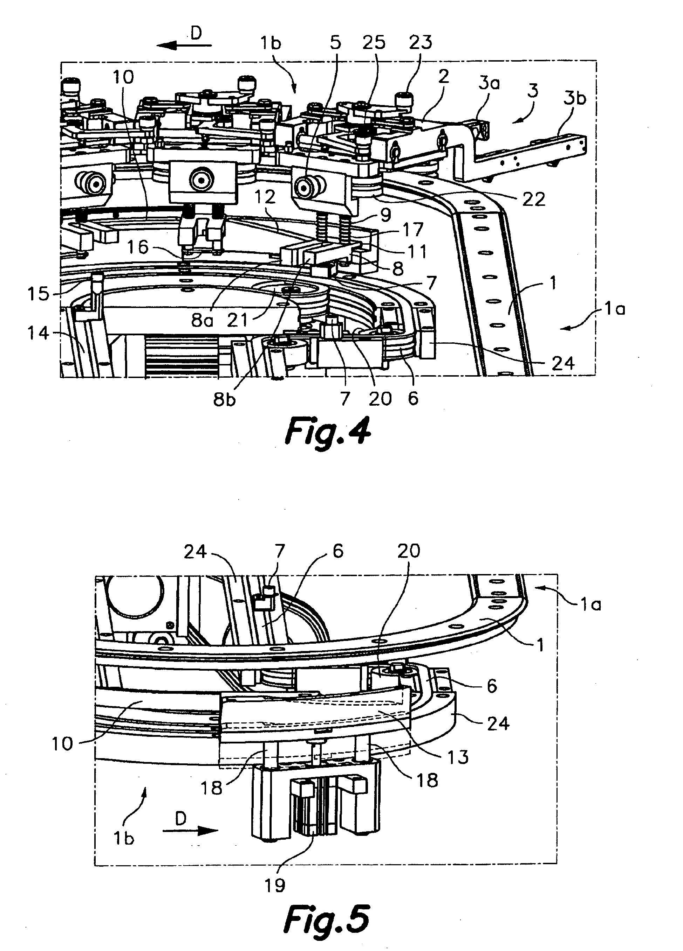

As is conventional, the carousel further comprises a flexible traction member 6, such as an endless roller chain or belt assembled to run on guide pulleys 20 and support members 24 defining a closed circuit, a part of which runs parallel to the return section 1b. An actuator, such as an electric motor (not shown), is operatively connected to move the flexible traction member 6 along said closed circuit. The flexible traction member 6 has fixed driving elements 7 which protrude upwards and which are coupled with corresponding coupling elements 8 assembled in the gripper-holding carriages 2 to drive the gripper-holding carriages 2 along said return section 1b. In the coupled position, the driving element 7 is inserted between two yoke-shaped arms 8a, 8b (better shown in Fig. 4) of the coupling element 8.

The mentioned closed circuit followed by the flexible traction member 6 is configured such that said coupling element 8 of each gripper-holding carriage 2 is decoupled from the corresponding driving element 7 of the flexible traction member 6 at the same time as the cam follower 5 of the same gripper-holding carriage 2 is coupled to said cam groove 4a of the drum cam 4 at the beginning of the work section 1a and the cam follower 5 of each gripper-holding carriage 2 is decoupled from said cam groove 4a of the drum cam 4 at the same time as the coupling element 8 of the same gripper-holding carriage 2 is coupled again to a driving element 7 of the flexible traction member 6 at the end of the work section 1a.

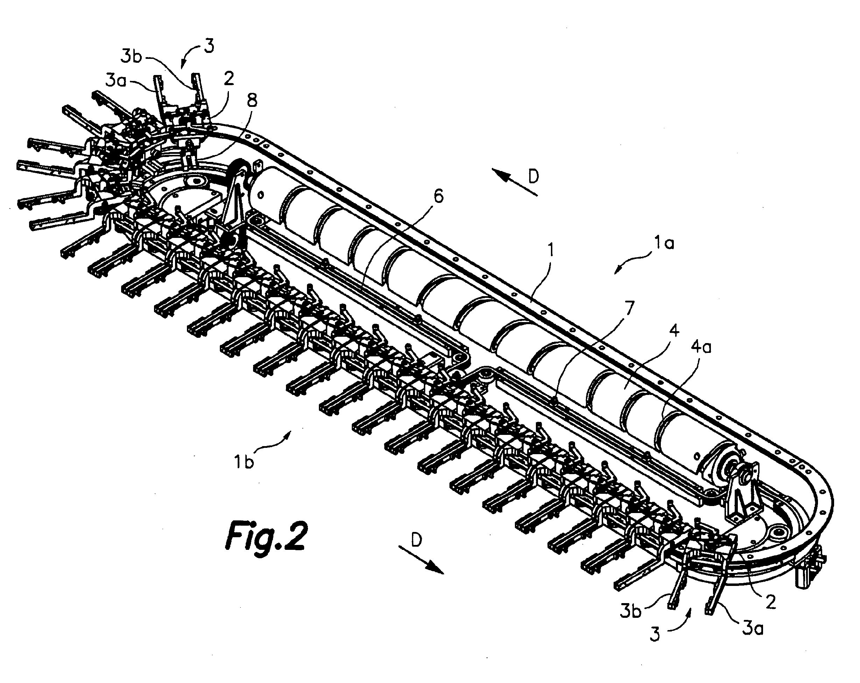

Fig. 2 shows the carousel of the present invention with the gripper-holding carriages 2 in a maintenance position in which the gripper-holding carriages 2 accumulate next to each other in the return section 1b such that the work section 1a is clear. This facilitates performing maintenance tasks in the work section of the carousel and in the operating units of the automatic packaging machine which are located in relation to the work section 1a of the carousel.

The maintenance position of the gripper-holding carriages is reached as a result of decoupling means which can be activated to decouple the coupling elements 8 attached to the gripper-holding carriages 2 from the driving elements 7 attached to the flexible traction member 6 at the beginning of the return section 1b, and of retaining means maintaining the coupling elements 8 decoupled from the driving elements 7 along a large part of the return section 1b. The gripper-holding carriages 2 are returned to the work position by means of auxiliary driving means which can be activated to drive the gripper-holding carriages 2 along the return section 1b while the coupling elements 8 are maintained decoupled from the driving elements 7, and recoupling means which can be activated to couple again said coupling elements 8 with the driving elements 7 at the end of the return section 1b.

As better shown in Figs. 6 and 7, to make decoupling and recoupling possible, each of the gripper-holding carriages 2 has a fixed vertical guide element 9 and the corresponding coupling element 8 is installed such that it can move freely along said vertical guide element 9 between a lower position (Fig. 6) in which the coupling element 8 is coupled to one of the driving elements 7, and an upper position (Fig. 7) in which the coupling element 8 is decoupled from the driving elements 7. At a lower end of the vertical guide element 9 there is fixed a stop 16 defining the lower position of the coupling element 8, and the coupling element 8 is pushed towards the lower position and against said stop 16 by an elastic element 17, which is, for example, in the form of a coil spring arranged around the vertical guide element 9.

The mentioned retaining means comprise a support track 10 arranged along a large part of the return section 1b and each coupling element 8 has fixed a runner 11 running on said support track 10 when the coupling element 8 is in said upper position (Fig. 7). Alternatively, the runner 11 could be replaced with a wheel or another similar rolling or sliding element. As shown in Fig. 6, the support track 10 is located at such a height that the runner 11 passes below the support track 10 when the coupling element 8 is in said lower position.

Said decoupling means comprise an upward ramp 12 which can be moved vertically by an actuator (not shown) between a lower withdrawn position (not shown) in which the upward ramp 12 is outside the trajectory of said runner 11 when the coupling element 8 is in the lower position, and an upper operating position (better shown in Fig. 4) in which said upward ramp 12 has an entrance end located at a level lower than the trajectory of the runner 11 when the coupling element 8 is in the lower position and an exit end located adjacent to and at the same level as an entrance end of the support track 10.

Therefore when the upward ramp 12 is in said withdrawn position, the gripper-holding carriages 2 continue their course along the return section in the work position being driven by the driving elements 7 coupled to the coupling elements 8, and when the upward ramp 12 is in said operating position (Fig. 4), the runner 11 of each gripper-holding carriage 2 runs thereon and moves the coupling element 8 from the lower position to the upper position, whereby the corresponding driving element 7 is decoupled from the coupling element 8 and continues its course along the return section 1b while the gripper-holding carriage 2 is momentarily stopped at the beginning of the return section.

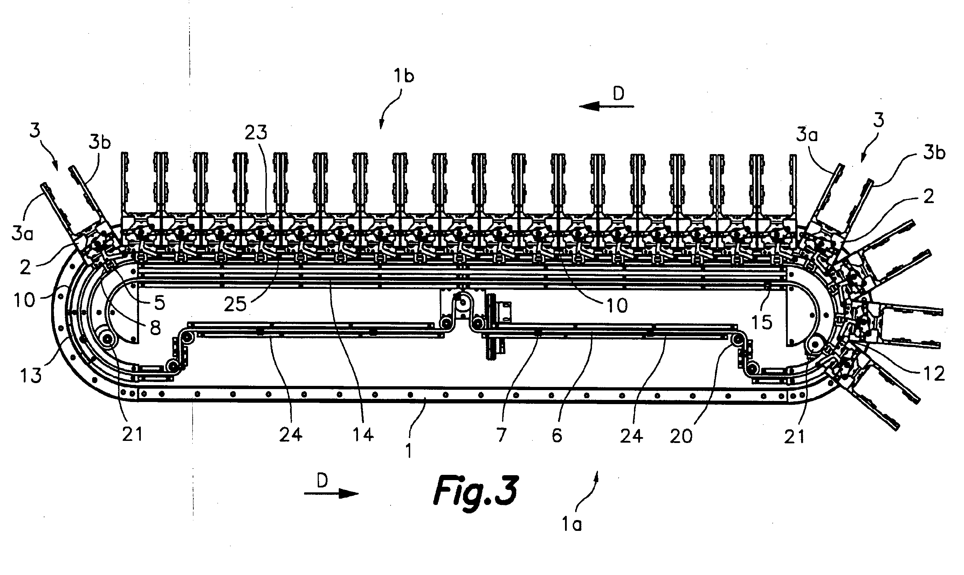

The successive gripper-holding carriages 2 which are gradually added to the return section 1b in the maintenance position, while still being pushed by the flexible traction member 6 along the upward ramp 12, push the gripper-holding carriages 2 which are already in the maintenance position along the support track 10, which maintains the coupling elements 8 in the decoupled upper position, until the coupling element 8 of the last gripper-holding carriage 2 is decoupled from the corresponding driving element 7 and all the gripper-holding carriages 2 accumulate next to each other in the return section 1b in the maintenance position shown in Figs. 2 and 3.

The aforementioned recoupling means comprise a downward ramp 13 which can be moved vertically by an actuator 19 (better shown in Fig. 5) between a lower withdrawn position (shown by means of dotted lines in Fig. 5) in which the downward ramp 13 is outside the trajectory of the runner 11 when the coupling element 8 is in the lower position, and an upper operating position (shown by means of continuous lines in Fig. 5) in which the downward ramp 13 has an entrance end located adjacent to and at the same level as an exit end of the support track 10 and an exit end located at a level lower than the trajectory of the wheel or runner 11 I when the coupling element is in the lower position.

Thus, when the downward ramp 13 is in the operating position, the runners 11 of the gripper-holding carriages 2, which are in the maintenance position and which are moved by said auxiliary driving means, run on the downward ramp 13 and the coupling elements 8 are moved from the upper position to the lower position, whereas when the downward ramp 13 is in the withdrawn position, it does not interfere with the normal movement of the gripper-holding carriages 2 in the work position along the return section 1b.

As better shown in Fig. 5, the downward ramp 13 is coupled to a vertical guide element 18 and said actuator 19, which can be a dynamic fluid cylinder and piston assembly, for example, is operatively connected to move the downward ramp 13 along said vertical guide element 18 between the lower withdrawn position and the upper operating position. Although not shown in the drawings, the upward ramp 12 is coupled to a vertical guide element similarly to that described in relation to the downward ramp 13, and an actuator is operatively connected to move the upward ramp 12 along said vertical guide element between the lower withdrawn position and the upper operating position.

The auxiliary driving means comprise an auxiliary flexible traction member 14, such as a endless roller chain or belt assembled on pulleys 21 and support members 24 defining a closed circuit, a part of which runs parallel to the support track 10 along the rectilinear portion and part of the curved portions of the return section 1b. An actuator, such as an electric motor (not shown), is operatively connected to move the auxiliary flexible traction member 14 along said closed circuit. The auxiliary flexible traction member 14 has a fixed single protruding auxiliary driving element 15 (better shown in Fig. 4) which is coupled with an element of the last gripper-holding carriage 2 when all the gripper-holding carriages 2 accumulate in the return section 1b in the maintenance position, with their coupling elements 8 maintained in the upper position by the support track 10.

Fig. 4 shows that the front arm 8a of the two yoke-shaped arms 8a, 8b of the coupling element 8 is higher and longer than the rear arm 8b, and the circuit of the auxiliary flexible traction member 14 is located such that the auxiliary driving element 15 is coupled with an end of the front arm 8a protruding from an end of the rear arm 8b. The actuator which moves the auxiliary flexible traction member 14 is controlled to move the auxiliary driving element 15 by steps, such that the auxiliary driving element 15 pushes the last gripper-holding carriage 2, and the latter in turn pushes the penultimate one and so on so forth, such that the gripper-holding carriages 2 push each other along the return section 1b until the downward ramp 13 returns them to their work position.

The movements of the auxiliary flexible traction member 14 are synchronised with the movement of the main flexible traction member 6, which moves at a constant speed, such that when a gripper-holding carriage 2 is pushed along the downward ramp 13 the corresponding coupling element 8 coincides when descending from its upper position to its lower position with one of the driving elements 7 fixed to the main flexible traction member 6 and is coupled therewith.

Modifications and variations with respect to the embodiment shown and described will occur to a person skilled in the art without departing from the scope of the present invention as it is defined in the attached claims.

## Claims

1. A carousel for a horizontal-type automatic packaging machine, comprising:
a guide device (1) defining a horizontal closed circuit which has a work section (1a) adjacent to successive operating units of said packaging machine and a return section (1b);
a plurality of gripper-holding carriages (2) coupled to said guide device (1) such that they can move freely along it, with at least one gripper (3) configured to grip containers (A) installed on each gripper-holding carriage (2);
a drum cam (4) provided with a cam groove (4a) in which a cam follower (5) assembled in each gripper-holding carriage (2) is coupled to drive the gripper-holding carriages (2) along said work section (1a); and
a flexible traction member (6) which has fixed driving elements (7) which are coupled with corresponding coupling elements (8) assembled in the gripper-holding carriages (2) to drive the gripper-holding carriages (2) along said return section (1b),
**characterised in that** it further comprises:
decoupling means which can be activated to decouple said coupling elements (8) from said driving elements (7) at the beginning of the return section (1b);
retaining means to maintain the coupling elements (8) decoupled from the driving elements (7) along at least part of the return section (1b), whereby the gripper-holding carriages (2) accumulate next to each other in the return section (1b) in a maintenance position leaving the work section (1a) clear;
auxiliary driving means which can be activated to drive the gripper-holding carriages (2) along the return section (1b) while the coupling elements (8) are maintained decoupled from the driving elements (7); and
recoupling means which can be activated to couple again said coupling elements (8) with the driving elements (7) at the end of the return section (1b), whereby the gripper-holding carriages (2) are returned to a work position.

2. The carousel according to claim 1, **characterised in that** each of the coupling elements (8) is installed such that it can move along a vertical guide element (9) fixed to the corresponding gripper-holding carriage (2) between a lower position in which the coupling element (8) is coupled to one of the driving elements (7), and an upper position in which the coupling element (8) is decoupled from the driving element (7), and said decoupling means are configured to move the coupling elements (8) from said lower position to said upper position, said retaining means are configured to maintain the coupling elements (8) in the upper position, and said recoupling means are configured to move the coupling elements (8) from the upper position to the lower position.

3. The carousel according to claim 2, **characterised in that** the retaining means comprise a support track (10) arranged along at least part of the return section (1b) and each coupling element (8) has a fixed wheel or runner (11) running on said support track (10) when the coupling element (8) is in said upper position.

4. The carousel according to claim 3, **characterised in that** the decoupling means comprise an upward ramp (12) movable between a withdrawn position, outside the trajectory of said wheel or runner (11) when the coupling element (8) is in the lower position, and an operating position in which said upward ramp (12) has an entrance end located at a level lower than the trajectory of the wheel or runner (11) when the coupling element (8) is in the lower position and an exit end located adjacent to and at the same level as an entrance end of the support track (10), whereby the wheels or runners (11) run on said upward ramp (12) when it is in said operating position to move the coupling elements (8) from the lower position to the upper position.

5. The carousel according to claim 4, **characterised in that** the recoupling means comprise a downward ramp (13) movable between a withdrawn position, outside the trajectory of said wheel or runner (11) when the coupling element is in the lower position, and an operating position in which said downward ramp (13) has an entrance end located adjacent to and at the same level as an exit end of the support track (10) and an exit end located at a level lower than the trajectory of the wheel or runner (11) when the coupling element is in the lower position, whereby the wheels or runners (11) run on said downward ramp (13) when it is in said operating position to move the coupling elements (8) from the upper position to the lower position.

6. The carousel according to claim 3, 4 or 5, **characterised in that** said auxiliary driving means comprise an auxiliary flexible traction member (14) which has a fixed auxiliary driving element (15) which is coupled with an element of the last gripper-holding carriage (2) when all the gripper-holding carriages (2) are accumulated in the return section (1b) with their coupling elements (8) maintained in the upper position by the support track (10) to move the gripper-holding carriages (2) by pushing each other along the return section (1b) to said work position.

7. The carousel according to claim 5, **characterised in that** the support track (10) is located in a position such that said wheel or runner (11) passes below the support track (10) when the coupling element (8) is in said lower position.

8. The carousel according to any one of claims 2 to 6, **characterised in that** said vertical guide element (9) is associated with a stop (16) defining the lower position of the coupling element (8), and an elastic element (17) is arranged such that it pushes the coupling element (8) towards the lower position and against said stop (16).

9. The carousel according to claim 4, **characterised in that** the upward ramp (12) is coupled to a vertical guide element and an actuator is operatively connected to move the upward ramp (12) along said vertical guide element between said withdrawn position and said operating position.

10. The carousel according to claim 5, **characterised in that** the downward ramp (13) is coupled to a vertical guide element (18) and an actuator (19) is operatively connected to move the downward ramp (13) along said vertical guide element (18) between said withdrawn position and said operating position.

11. The carousel according to claim 1, **characterised in that** said main flexible traction member (6) is an endless belt or roller chain assembled on guide pulleys (20) and operated by an actuator.

12. The carousel according to claim 1, **characterised in that** said auxiliary flexible traction member (14) is an endless belt or roller chain assembled on pulleys (21) and operated by an actuator.

## Patentansprüche

1. Karussell für eine horizontale automatische Verpackungsmaschine, umfassend:
eine Führungsvorrichtung (1), die einen horizontalen geschlossenen Kreislauf definiert, welcher einen Arbeitsabschnitt (1a), der an aufeinanderfolgenden Betriebseinheiten der genannten Verpackungsmaschine angrenzt, und einen Rückkehrabschnitt (1b) aufweist;
eine Vielzahl von Greiferhalterwagen (2), welche mit der genannten Führungsvorrichtung (1) gekoppelt sind, so dass sie sich entlang derselben frei bewegen können, wobei zumindest ein Greifer (3) zum Greifen von Behältern (A) ausgebildet ist, der auf jedem Greiferhalterwagen (2) eingebaut ist;
eine Trommelkurve (4), die mit einer Kurvennut (4a) versehen ist, in welcher eine in jedem Greiferhalterwagen (2) gekoppelte Kurvenrolle (5) montiert ist, um die Greiferhalterwagen (2) entlang des genannten Arbeitsabschnitts (1a) zu fahren;
und
ein biegbares Zugelement (6), welches feste Fahrelemente (7) aufweist, welche mit entsprechenden in den Greiferhalterwagen (2) montierten Kopplungselementen (8) gekoppelt sind, um die Greiferhalterwagen (2) entlang des genannten Rückkehrabschnitts (1b) zu fahren,
**dadurch gekennzeichnet, dass** es zusätzlich Folgendes umfasst:
Entkopplungselemente, welche aktiviert werden können, um die genannten Kopplungselemente (8) von den genannten Fahrelementen (7) am Anfang des Rückkehrabschnitts (1 b) zu entkoppeln;
Rastmittel, um die Kopplungselemente (8) von den Fahrelementen (7) entlang mindestens eines Teils des Rückkehrabschnitts (1b) entkoppelt zu halten,
wodurch sich die Greiferhalterwagen (2) nebeneinander in dem Rückkehrabschnitt (1b) in einer Haltestellung ansammeln, so dass der Arbeitsabschnitt (1a) frei bleibt;
Hilfsfahrmittel, welche aktiviert werden können, um die Greiferhalterwagen (2) entlang des Rückkehrabschnitts (1b) zu fahren, während die Kopplungselemente (8) von den Fahrelementen (7) entkoppelt gehalten werden; und Rückkopplungselemente, welche aktiviert werden können, um die genannten Kopplungselemente (8) mit den Fahrelementen (7) am Ende des Rückkehrabschnitts (1b) rückzukoppeln, wodurch die Greiferhalterwagen (2) zu einer Arbeitsstellung rückkehren.

2. Karussell nach Anspruch 1, **dadurch gekennzeichnet, dass** jedes der Kopplungselemente (8) so eingebaut ist, dass es sich entlang eines vertikalen Führungselements (9), welches an dem entsprechenden Greiferhalterwagen (2) befestigt ist, zwischen einer unteren Stellung, in welcher das Kopplungselement (8) mit einem der Fahrelemente (7) gekoppelt ist, und einer oberen Stellung, in welcher das Kopplungselement (8) von dem Fahrelement (7) entkoppelt ist, bewegen kann, und dass die genannten Entkopplungselemente ausgebildet sind, um die Kopplungselemente (8) von der genannten unteren Stellung zur genannten oberen Stellung zu bewegen, die genannten Haltemittel ausgebildet sind, um die Kopplungselemente (8) in der oberen Stellung zu halten, und die genannten Rückkopplungselemente ausgebildet sind, um die Kopplungselemente (8) von der oberen Stellung zur unteren Stellung zu bewegen.

3. Karussell nach Anspruch 2, **dadurch gekennzeichnet, dass** die Haltemittel eine Tragebahn (10) umfassen, welche entlang mindestens eines Teils des Rückkehrabschnitts (1b) angeordnet ist, und dass jedes Kopplungselement (8) ein festes Rad oder eine feste Gleitkufe (11) aufweist, welches/welche auf der genannten Tragebahn (10) läuft, wenn sich das Kopplungselement (8) in der genannten oberen Stellung befindet.

4. Karussell nach Anspruch 3, **dadurch gekennzeichnet, dass** die Entkopplungselemente eine aufwärts gerichtete Rampe (12) umfassen, welche sich zwischen einer Entnahmestellung, außerhalb der Bewegungsbahn des genannten Rads oder der genannten Gleitkufe (11) wenn sich das Kopplungselement (8) in der unteren Stellung befindet, und einer Betriebsstellung, in welcher die genannte aufwärts gerichtete Rampe (12) ein Eingangsende aufweist, welches sich auf einer Höhe befindet, die weiter unten als die Bewegungsbahn des Rads oder der Gleitkufe (11) liegt, wenn sich das Kopplungselement (8) in der unteren Stellung befindet, und ein Ausgangsende aufweist, welches an das Eingangsende der Tragebahn (10) angrenzt und sich auf derselben Höhe desselben befindet, bewegen kann, wodurch die Räder oder Gleitkufen (11) auf die genannte aufwärts gerichtete Rampe (12) laufen, wenn sie sich in der genannten Betriebsstellung befindet, um die Kopplungselemente (8) von der unteren Stellung zur oberen Stellung zu bewegen.

5. Karussell nach Anspruch 4, **dadurch gekennzeichnet, dass** die Rückkopplungselemente eine abwärts gerichtete Rampe (13) umfassen, welche sich zwischen einer Entnahmestellung, außerhalb der Bewegungsbahn des genannten Rads oder der genannten Gleitkufe (11) wenn sich das Kopplungselement in der unteren Stellung befindet, und einer Betriebsstellung, in welcher die genannte abwärts gerichtete Rampe (13) ein Eingangsende aufweist, welches an das Eingangsende der Tragebahn (10) angrenzt und sich auf derselben Höhe desselben befindet, und ein Ausgangsende aufweist, welches sich auf einer Höhe befindet, die weiter unten als die Bewegungsbahn des Rads oder der Gleitkufe (11) liegt, wenn sich das Kopplungselement in der unteren Stellung befindet, bewegen kann, wodurch die Räder oder Gleitkufen (11) auf die genannte abwärts gerichtete Rampe (13) laufen, wenn sie sich in der genannten Betriebsstellung befindet, um die Kopplungselemente (8) von der oberen Stellung zur unteren Stellung zu bewegen.

6. Karussell nach Anspruch 3, 4 oder 5, **dadurch gekennzeichnet, dass** die genannten Hilfsfahrmittel ein biegbares Hilfszugelement (14) umfassen, welches ein festes Hilfsfahrelement (15) aufweist, welches mit einem Element des letzten Greiferhalterwagens (2) gekoppelt ist, wenn alle Greiferhalterwagen (2) in dem Rückkehrabschnitt (1 b) mit ihren Kopplungselementen (8) in der oberen Stellung von der Tragebahn (10) gehalten angesammelt sind, um die Greiferhalterwagen (2) durch Stossen gegeneinander entlang des Rückkehrabschnitts (1b) zur genannten Arbeitsstellung zu bewegen.

7. Karussell nach Anspruch 5, **dadurch gekennzeichnet, dass** sich die Tragebahn (10) in einer Stellung befindet, so dass das genannte Rad oder die genannte Gleitkufe (11) unter der Tragebahn (10) geht, wenn sich das Kopplungselement (8) in der genannten unteren Stellung befindet.

8. Karussell nach einem der Ansprüche 2 bis 6, **dadurch gekennzeichnet, dass** das genannte vertikale Führungselement (9) mit einem Anschlag (16) verbunden ist, der die untere Stellung des Kopplungselements (8) definiert, und ein elastisches Element (17) so angeordnet ist, dass es gegen das Kopplungselement (8) zur unteren Stellung und gegen den genannten Anschlag (16) stößt.

9. Karussell nach Anspruch 4, **dadurch gekennzeichnet, dass** die aufwärts gerichtete Rampe (12) mit einem vertikalen Führungselement gekoppelt ist und ein Aktuator wirksam angeschlossen ist, um die aufwärts gerichtete Rampe (12) entlang des genannten vertikalen Führungselements zwischen der genannten Entnahmestellung und der genannten Betriebsstellung zu bewegen.

10. Karussell nach Anspruch 5, **dadurch gekennzeichnet, dass** die abwärts gerichtete Rampe (13) mit einem vertikalen Führungselement (18) gekoppelt ist und ein Aktuator (19) wirksam angeschlossen ist, um die abwärts gerichtete Rampe (13) entlang des genannten vertikalen Führungselements (18) zwischen der genannten Entnahmestellung und der genannten Betriebsstellung zu bewegen.

11. Karussell nach Anspruch 1, **dadurch gekennzeichnet, dass** das genannte biegbare Hauptzugelement (6) ein endloses Förderband oder eine Rollenkette ist, das/die auf Führungsrollen (20) montiert ist und von einem Aktuator betrieben wird.

12. Karussell nach Anspruch 1, **dadurch gekennzeichnet, dass** das genannte biegbare Hilfszugelement (14) ein endloses Förderband oder eine Rollenkette ist, das/die auf Rollen (21) montiert ist und von einem Aktuator betrieben wird.

## Revendications

1. Un carrousel pour une machine d'emballage automatique de type horizontal comportant:
un dispositif de guidage (1) définissant un circuit fermé horizontal ayant une section de travail (1a) adjacente aux unités opérationnelles successives de cette machine d'emballage et une section de retour (1 b);
une pluralité de chariots de serrage (2) couplés à ce dispositif de guidage (1) de sorte qu'ils puissent se déplacer librement tout au long de celui-ci avec au moins une pince (3) configurée pour saisir les récipients (A) installés sur chacun des chariots de serrage (2);
une came du tambour (4) pourvue d'une fente pour came (4a) dans laquelle un suiveur de came (5) assemblé sur chaque chariot de serrage (2) est couplé aux chariots de serrage (2) le long de cette section de travail (1a); et
un élément de traction flexible (6) ayant des éléments d'entraînement fixes (7) qui sont couplés aux éléments de couplage correspondants (8) assemblés sur les chariots de serrage (2) pour entraîner les chariots de serrage (2) le long de cette section de retour (1 b),
**caractérisé en ce qu'**il comporte en plus
des moyens de découplage pouvant être activés pour dégager ces éléments de couplage (8) de ces éléments d'entraînement (7) au commencement de la section de retour (1 b);
des moyens de rétention pour maintenir les éléments de couplage (8) dégagés des éléments d'entraînement (7) le long d'au moins une partie de la section de retour (1b) où les chariots de serrage (2) s'accumulent les uns à côtés des autres dans la section de retour (1b), en position de maintien en laissant la section de travail (1a) dégagée;
des moyens d'entraînement auxiliaires pouvant être activés pour entraîner les chariots de serrage (2) le long de la section de retour (1b) tandis que les éléments de couplage (8) sont maintenus dégagés des éléments d'entraînement (7); et
des moyens de recouplage pouvant être activés pour coupler à nouveau ces éléments de couplage (8) aux éléments d'entraînement (7) à la fin de la section de retour (1b), d'où les chariots de serrage (2) retournent à la position de travail.

2. Le carrousel conformément à la revendication 1, **caractérisé en ce que** chacun des éléments de couplage (8) est installé de sorte qu'il puisse se déplacer le long d'un élément de guidage vertical (9) fixé au chariot de serrage correspondant (2) entre une position inférieure dans laquelle l'élément de couplage (8) est couplé à l'un des éléments d'entraînement (7), et une position plus élevée dans laquelle l'élément de couplage (8) est dégagé de l'élément d'entraînement (7) et ces moyens de découplage sont configurés pour déplacer les éléments de couplage (8) de cette position inférieure à cette position supérieure, ces moyens de rétention sont configurés pour maintenir les éléments de couplage (8) dans la position supérieure et ces moyens de recouplage sont configurés pour déplacer les éléments de couplage (8) de la position supérieure à la position inférieure.

3. Le carrousel conformément à la revendication 2, **caractérisé en ce que** les moyens de rétention comportent un rail de support (10) aménagé le long d'au moins une partie de la section de retour (1b) et chaque élément de couplage (8) possède une roue fixe ou un patin (11) glissant sur ce rail de support (10) lorsque l'élément de couplage (8) se trouve dans cette position supérieure.

4. Le carrousel conformément à la revendication 3, **caractérisé en ce que** les moyens de découplage comportent une rampe ascendante (12) déplaçable entre une position en retrait, à l'extérieur de la trajectoire de cette roue ou patin (11) lorsque l'élément de couplage (8) se trouve dans la position inférieure et une position opérationnelle dans laquelle cette rampe ascendante (12) a une extrémité d'entrée située à un niveau inférieur à celui de la trajectoire de la roue ou patin (11) lorsque l'élément de couplage (8) se trouve dans la position inférieure et une extrémité de sortie située adjacente et au même niveau qu'une entrée du rail de support (10), où les roues ou patins (11) glissent sur cette rampe ascendante (12) lorsqu'elle est dans cette position opérationnelle pour déplacer les éléments de couplage (8) de la position inférieure à la position supérieure.

5. Le carrousel conformément à la revendication 4, **caractérisé en ce que** les moyens de recouplage comportent une rampe descendante (13) déplaçable entre une position de retrait, à l'extérieur de la trajectoire de cette roue ou patin (11) lorsque l'élément de couplage se trouve dans la position inférieure et en position opérationnelle dans laquelle cette rampe descendante (13) possède une extrémité d'entrée située adjacente et au même niveau qu'une extrémité de sortie du rail de support (10) et une extrémité de sortie située à un niveau inférieur que la trajectoire de la roue ou patin (11) lorsque l'élément de couplage se trouve dans la position inférieure, où les roues ou patins (11) glissent sur cette rampe descendante (13) lorsqu'elle se trouve dans cette position opérationnelle pour déplacer les éléments de couplage (8) de la position supérieure à la position inférieure.

6. Le carrousel conformément à la revendication 3, 4 ou 5, **caractérisé en ce que** ces moyens d'entraînement auxiliaires comportent un membre de traction flexible auxiliaire (14) possédant un élément d'entraînement auxiliaire fixe (15) qui est couplé à un élément du dernier chariot de serrage (2) lorsque tous les chariots de serrage (2) sont accumulés sur la section de retour (1b) leurs éléments de couplage (8) étant maintenus dans la position supérieure par le rail de support (10) pour déplacer les chariots de serrage (2) en se poussant les uns les autres le long de la section de retour (1b) à cette position de travail.

7. Le carrousel conformément à la revendication 5, **caractérisé en ce que** le rail de support (10) est situé dans une position telle que cette roue ou ce patin (11) passe au-dessous du rail de support (10) lorsque l'élément de couplage (8) se trouve à la position inférieure.

8. Le carrousel conformément à une des revendications 2 à 6, **caractérisé en ce que** cet élément de guidage vertical (9) est relié à un arrêt (16) définissant la position inférieure de l'élément de couplage (8) et un élément élastique (17) est agencé de sorte qu'il pousse l'élément de couplage (8) vers la position inférieure et contre cet arrêt (16).

9. Le carrousel conformément à la revendication 4, **caractérisé en ce que** la rampe ascendante (12) est couplée à un élément de guidage vertical et un actionneur est relié de manière opérationnelle pour déplacer la rampe ascendante (12) le long de cet élément de guide vertical entre cette position en retrait et cette position opérationnelle.

10. Le carrousel conformément à la revendication 5, **caractérisé en ce que** la rampe descendante (13) est couplée à un élément de guide vertical (18) et un actionneur (19) est relié de manière opérationnelle pour déplacer la rampe descendante (13) le long de cet élément de guidage vertical (18) entre cette position en retrait et cette position opérationnelle.

11. Le carrousel conformément à la revendication 1, **caractérisé en ce que** cet élément de traction flexible principal (6) est une bande sans fin ou une chaîne à rouleaux assemblée sur une poulie de guidage (20) et entraînée par un actionneur.

12. Le carrousel conformément à la revendication 1, **caractérisé en ce que** cet élément de traction flexible auxiliaire (14) est une bande sans fin ou une chaîne à rouleaux assemblée sur les poulies (21) et entraînée par un actionneur.
